Europäisches Patentamt

**European Patent Office**

Office européen des brevets

(11) Numéro de publication: **0 151 545**
**A1**

(12) # DEMANDE DE BREVET EUROPEEN

(21) Numéro de dépôt: **85400081.7**

(22) Date de dépôt: **17.01.85**

(51) Int. Cl.⁴: **B 29 C 47/66**

(30) Priorité: **26.01.84 FR 8401182**

(43) Date de publication de la demande:
**14.08.85 Bulletin 85/33**

(84) Etats contractants désignés:
**AT BE CH DE GB IT LI LU NL SE**

(71) Demandeur: **CLEXTRAL**
**15 rue Pasquier**
**F-75008 Paris(FR)**

(72) Inventeur: **Chapet, Marc**
**41 Rue Emile Zola**
**F-42240 Unieux(FR)**

(74) Mandataire: **Moncheny, Michel et al,**
**c/o Cabinet Lavoix 2 Place d'Estienne d'Orves**
**F-75441 Paris Cedex 09(FR)**

(54) **Fourreau composite à plusieurs lobes pour une machine de traitement à plusieurs vis.**

(57) L'invention a pour objet un fourreau composite à plusieurs lobes, la paroi interne dudit fourreau étant constituée de plusieurs secteurs cylindriques adjacents enveloppant chacun une vis sur la partie de la périphérie de celle-ci extérieure à la zone de pénétration.

Selon l'invention, la couche métallique plus dure (11) déposée sur la paroi interne (10) du corps (2) est apportée sous forme d'une poudre contenant les constituants désirés, et cette poudre est soudée sur la paroi interne (10) métallique de base à l'aide d'une torche à plasma fonctionnant suivant le principe de l'arc transféré ou bien de l'arc semi-transféré.

L'invention s'applique aux machines à plusieurs vis imbriquées du genre extrudeuses.

Fig 1

Fourreau composite à plusieurs lobes pour une machine de traitement à

plusieurs vis

L'invention a pour objet un fourreau à plusieurs lobes pour une machine de traitement de matières à plusieurs vis parallèles.

Les machines de traitement de matières, et en particulier les extrudeuses, comprennent plusieurs vis parallèles ayant des filets dont le pas peut varier le long de l'axe et qui pénètrent l'une dans l'autre de façon à entrainer la matière le long des filets par la rotation des vis. A cet effet, les vis sont placées à l'intérieur d'un fourreau à plusieurs lobes, chaque lobe ayant une paroi interne cylindrique enveloppant une vis sur la partie de la périphérie de celle-ci extérieure à la zone de pénétration.

Pour contrôler les conditions d'avancement de la matière dans les vis, il est généralement nécessaire que le jeu existant entre la périphérie de la vis et la paroi interne du fourreau soit aussi faible que possible. C'est pourquoi on doit aléser les parois internes du fourreau avec précision et, dans les machines comportant plusieurs vis, la constitution du fourreau en plusieurs lobes rend cette opération délicate et onéreuse.

Par ailleurs la masse du fourreau et sa paroi interne doivent présenter des caractéristiques différentes et souvent même contradictoires car elles sont soumises à des sollicitations qui ne sont pas du tout les mêmes à coeur et en surface. En effet, dans les machines de traitement de matières, les fourreaux sont soumis à des contraintes thermiques dues au travail entre 150° et 300°C et des contraintes mécaniques créées par la pression du produit extrudé poussé par les vis, laquelle pression peut dépasser 200 bars. D'autre part la paroi interne subit une usure provoquée par le produit extrudé et par le frottement des vis et/ou une corrosion.

Toutes ces sollicitations imposent par conséquent au fourreau des propriétés particulières et contradictoires, car l'extérieur doit présenter une résistance modérée assortie d'une bonne résilience et la paroi interne doit posséder une grande résistance à la fissuration par fatigue, une dureté élevée, un faible coefficient de frottement et une résistance élevée à l'abrasion.

On connait des fourreaux dans lesquels des chemises sont utilisées pour recouvrir les secteurs cylindriques formant les différents lobes, chaque chemise ayant la forme d'un segment cylindrique qui s'appuie vers l'extérieur sur un carter massif entourant les deux vis et formant le corps du fourreau proprement dit. Ce carter massif est prévu pour encaisser la pression exercée par la matière entrainée à l'intérieur du fourreau, les chemises résistant seulement à la corrosion et à l'usure. Lorsque chaque chemise recouvre entièrement le secteur du fourreau correspondant, elle doit être prolongée jusqu'à s'accoler à la chemise adjacente en formant une pointe dans la zone d'interpénétration des vis. Il est difficile d'éviter qu'il existe un petit espace entre les bords adjacents des deux chemises et cet espace doit être soudé et réalisé pour éviter qu'il ne s'y accumule de la matière ce qui présente un inconvénient. De plus, le corps du fourreau et sa paroi interne étant constitués par des pièces distinctes, la transmission de chaleur entre des éléments chauffants placés autour du fourreau et la matière à l'intérieur dudit fourreau, s'effectue dans de mauvaises conditions.

On connait également des fourreaux réalisés soit à partir d'un matériau homogène, la surface interne subissant un traitement thermique spécial ou un traitement superficiel, soit à partir de pièces métalliques composites, le matériau dur est alors rapporté par centrifugation dans une enveloppe en acier. Mais ce procédé entraine en général un accrochage insuffisant du métal dur sur le métal de base.

Le but de l'invention est donc de réaliser un fourreau composite à plusieurs lobes pour une machine de traitement de matières à plusieurs vis, résistant bien à des sollicitations d'intensité élevée et différentes à coeur et en surface.

Suivant l'invention, la couche métallique plus dure, déposée sur la paroi interne du corps du fourreau comprenant plusieurs lobes, est apportée sous forme d'une poudre contenant les constituants désirés et cette poudre est soudée sur la paroi interne métallique de base à l'aide d'une torche à plasma fonctionnant suivant le principe de l'arc transféré ou bien de l'arc semi-transféré.

D'autres avantages et caractéristiques ressortiront plus clairement de la description qui va suivre d'un mode de mise en oeuvre de l'invention, donné à titre d'exemple non limitatif et représenté aux dessins annexés, dans lesquels :

- la figure 1 représente une vue schématique en perspective d'un fourreau composite à plusieurs lobes conforme à l'invention.

- La figure 2 représente une vue de détails à plus grande échelle de la paroi interne du fourreau.

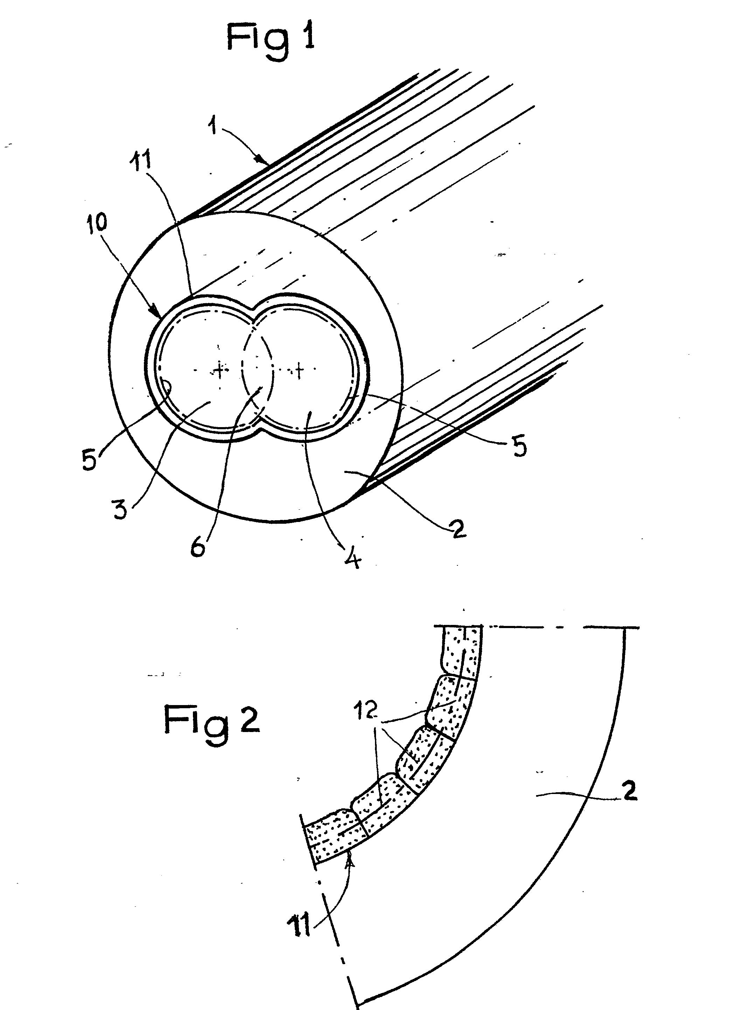

Le fourreau 1 représenté à la figure 1 pour une machine à deux

3   **0151545**

vis parallèles, se compose d'un corps massif 2 qui possède deux alésages cylindriques (3, 4) formant deux lobes pour le passage des vis. Sur la figure, on a représenté en traits mixtes les deux vis 5 qui sont entrainées en rotation de façon à assurer l'avancement d'une matière à l'intérieur du fourreau. On sait que les vis sont entrainées dans le même sens de rotation si les filetages sont identiques et en sens inverse lorsque les filetages sont inversés. Cependant, dans tous les cas, les deux filetages pénètrent l'un dans l'autre dans une zone médiane 6 placée entre les deux axes des vis.

Pour que la matière soit entrainée dans de bonnes conditions dans la machine, il est nécessaire que les deux vis soient placées à l'intérieur d'un fourreau dont le profil interne enveloppe la périphérie des vis avec un jeu aussi faible que possible, la tolérance dépendant notamment du degré de viscosité de la matière que l'on désire entrainer dans les vis. Il résulte que la paroi interne 10 du fourreau sera constituée de deux secteurs cylindriques ou lobes (3, 4) accolés ; chacun des secteurs a un axe coïncidant avec celui d'une vis et un rayon légèrement supérieur à celui de la vis mais qui doit cependant être contrôlé avec précision en fonction du jeu tolérable.

D'autre part, le corps 2 du fourreau 1 doit présenter une résistance modérée assortie d'une bonne résilience et la paroi interne 10 doit posséder une grande résistance à la fissuration par fatigue, une dureté élevée, un faible coefficient de frottement et une résistance élevée à l'abrasion.

A cet effet, le fourreau 1 est réalisé à partir d'un corps métallique 2 en acier dans lequel la paroi interne 10 des lobes (3,4) est revêtue ou rechargée au moyen d'une couche métallique 11 plus dure de compositions adaptées aux conditions particulières de fonctionnement de la pièce suivant qu'il y a lieu de privilégier la résistance à l'abrasion, à la corrosion, à la fatigue mécanique ou au frottement.

Cette couche dure 11 est apportée sous la forme d'une poudre, qui est ensuite soudée sur le métal de base à l'aide d'une torche à plasma fonctionnant suivant le principe de l'arc transféré ou bien de l'arc semi-transféré. Cette torche à plasma constituant la source thermique fond simultanément la surface de la pièce à revêtir, ainsi que le produit de rechargement apporté sous forme de poudre. Il se forme un bain métallique. Le dépôt est lié au substrat par une véritable opération métallurgique du type soudage.

Avant le dépôt de la couche dure 11, les lobes (3, 4) ont un

4

0151545

rayon légèrement supérieur au rayon final que l'on désire obtenir, et ladite couche dure peut avoir, suivant le but visé, une épaisseur comprise entre 0,7 et 8 mm. Le dépôt de la couche 11 est réalisé en une seule couche ou en multicouche, par passes longitudinales parallèles et successives comme représenté en 12 sur la figure 2. Ensuite chaque lobe cylindrique (3, 4) est usiné par rectification pour obtenir le rayon désiré.

Le métal de base utilisé pour le corps du fourreau peut être :

1. un acier faiblement allié tel que :

C % = 0,20 à 1    Ni % = 0 à 2,5

Mn % = 0,2 à 1,5    Cr % = 0,5 à 6

Si % = 0,2 à 1    Mo % = 0 à 2

S % = 0,005 à 0,012    V % = 0 à 0,5

2. Un acier inoxydable martensitique tel que :

C % = 0,06 à 0,20    Mo % = 0 à 1

Cr % = 13 à 17

Ni % = 0 à 4

3. Un acier inoxydable austénitique tel que :

C % = 0,06 à 0,12    Mo % = 0 à 3

Cr % = 16 à 19    Cu % = 0 à 4

Ni % = 4 à 12

Par ailleurs, la couche métallique plus dure constituant la paroi interne du fourreau peut être constituée soit par un acier rapide, au chrome-tungstène, ou au chrome-molybdène, ou au chrome associé à la fois à plusieurs éléments tels que : le tungstène, le molybdène, le vanadium, le cobalt, soit par d'autres dépôts durs.

Nous donnons ci-dessous un exemple de réalisation pour un fourreau d'extrudeuse ayant les caractéristiques suivantes :

- diamètre extérieur........... : 320 mm
- entraxe des alésages ........ : 105 mm
- diamètre d'alésage .......... : 132 mm
- longueur du fourreau ........ :1350 mm ;

la matière du corps du fourreau est un acier se composant :

- C = 0,47 % ; Mn = 0,90 % ; Si = 0,24 % ; Ni = 0,16 % ; Cr = 1,02 %

et la poudre pour rechargement dur est un acier rapide de composition :

- C = 0,85 % ; Mn = 0,27 % ; Si = 0,22 % ; Ni = 0,15 % ; Cr = 4,60 % ; Mo = 5,15 % ; W = 6,2 % ; V = 2,05 % ; Co = 0,4 %

préchauffage de la pièce : 400°C.

La surface dure trempe au cours du refroidissement, puis est en-

**0151545**

suite usinée par rectification. Le dépôt d'épaisseur 2 à 4 mm en une couche est fait par passes longitudinales parallèles et successives. La dureté obtenue sur le dépôt est de 60 à 63 HRC.

La construction composite permet d'adapter les aciers choisis à leurs fonctions respectives : - tenue mécanique pour le corps du fourreau, - résistance à la fatigue et à l'usure pour la couche de travail, et représente une économie évidente de matières nobles, puisque seule ladite couche de travail est réalisée en matériaux à coût élevé. D'autre part, cette construction permet également d'obtenir dans la couche dure déposée, une structure homogène, avec une répartition fine des particules dures, et sans défaut métallurgique du type inclusions ou porosités, susceptibles de nuire aux propriétés d'endurance du matériau et aux contraintes mécaniques. L'utilisation d'une couche dure apportée sous forme de poudre autorise en particulier l'emploi de matériaux contenant de fortes proportions de carbures ou autres phases dures, très performants.

Les performances des fourreaux d'extrudeuse à plusieurs vis copénétrantes réalisés selon l'invention sont augmentées par rapport aux fourreaux traditionnels grâce aux gains en coefficient de frottement et en résistance à l'usure. Bien entendu, le dépôt d'une couche dure sur la paroi interne, suivant cette méthode peut également être employé pour le rechargement des fourreaux usés.

REVENDICATIONS

1. Fourreau composite à plusieurs lobes pour une machine de traitement comprenant au moins deux vis d'axes parallèles pénètrant l'une dans l'autre et entrainées en rotation à l'intérieur dudit fourreau, celui-ci étant formé d'un corps massif en acier comportant une paroi interne revêtue d'une couche métallique plus dure et constituée de plusieurs lobes correspondant chacun à une vis,

caractérisé par le fait que la couche métallique plus dure (11) déposée sur la paroi interne (10) du corps (2) est apportée sous forme d'une poudre contenant les constituants désirés, et par le fait que cette poudre est soudée sur la paroi interne (10) métallique de base à l'aide d'une torche à plasma fonctionnant suivant le principe de l'arc transféré ou bien de l'arc semi-transféré.

2. Fourreau composite à plusieurs lobes selon la revendication 1, caractérisé par le fait que le corps (2) du fourreau est constitué soit par un acier faiblement allié, soit par un acier inoxydable martensitique ou soit par un acier inoxydable austénitique et la couche métallique (11) est constituée soit par un acier rapide, au chrome-tungstène, ou au chrome-molybdène, ou au chrome associé à la fois à plusieurs éléments tels que : le tungstène, le molybdène, le vanadium, le cobalt ou soit par d'autres dépôts durs.

3. Fourreau composite à plusieurs lobes selon les revendications 1 et 2,

caractérisé par le fait que le dépôt de la couche métallique (11) est réalisé en une seule couche ou en multicouche par passes longitudinales parallèles et successives, puis usinée par rectification.

4. Fourreau composite à plusieurs lobes selon l'une quelconque des revendications précédentes,

caractérisé par le fait que la couche métallique (11) a une épaisseur de 0,7 à 8 mm, suivant le but visé.

# Fig 1

# Fig 2

Office européen
des brevets

**RAPPORT DE RECHERCHE EUROPEENNE**

0151545
Numéro de la demande

EP 85 40 0081

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | DE-A-1 529 977 (XALOY)<br>* Figures; page 1, paragraphes 1,2; page 6, paragraphe 2 - page 8, paragraphe 2 * | 1 | B 29 C 47/66 |
| A | | 2,4 | |
| | --- | | |
| Y | US-A-3 910 316 (REIFENHAUSER)<br>* Colonne 2, ligne 58 - colonne 3, ligne 2 * | 1 | |
| | --- | | |
| Y | GB-A-1 067 416 (FAHR)<br>* Colonne 1, lignes 8-16, 31-35 * | 1 | |
| | --- | | |
| Y | KUNSTSTOFFE, vol. 69, no. 11, novembre 1979, pages 758-771; P. VOLZ: "Verschleiss in der Kunststofftechnologie"<br>* Pages 765-767; figures 15,19 * | 1 | **DOMAINES TECHNIQUES RECHERCHES (Int. Cl.4)**<br><br>B 29 C |
| A | IDEM | 2 | |
| | --- | | |
| Y | JAPAN PLASTICS AGE, vol. 18, no. 175, septembre-octobre 1980, pages 48-53, Tokyo, JP; S. TANAKA: "Present application technques for TEM twin screw extruder"<br>* Page 51, sections 5,6; figures 8,9 * | 1 | |
| | --- -/- | | |

Le présent rapport de recherche a été établi pour toutes les revendications

| Lieu de la recherche | Date d'achèvement de la recherche | Examinateur |
|---|---|---|
| LA HAYE | 02-04-1985 | ASHLEY G.W. |

Office européen
des brevets

**RAPPORT DE RECHERCHE EUROPEENNE**

## DOCUMENTS CONSIDERES COMME PERTINENTS

Page 2

| Catégorie | Citation du document avec indication, en cas de besoin, des parties pertinentes | Revendication concernée | CLASSEMENT DE LA DEMANDE (Int. Cl.4) |
|---|---|---|---|
| Y | US-A-3 819 901 (BERINDE et al.)<br>* Colonne 1, lignes 5-20 * | 1 | |
| A | US-A-2 292 694 (JERABEK)<br>* Colonne 2, lignes 8-13 * | 1 | |
| A | | 2 | |

DOMAINES TECHNIQUES
RECHERCHES (Int. Cl.4)

Le présent rapport de recherche a été établi pour toutes les revendications

| Lieu de la recherche | Date d'achèvement de la recherche | Examinateur |
|---|---|---|
| LA HAYE | 02-04-1985 | ASHLEY G.W. |